# EUROPÄISCHE PATENTSCHRIFT

(11) **EP 2 924 857 B1**
(45) Veröffentlichungstag und Bekanntmachung des Hinweises auf die Patenterteilung: **03.05.2017**
(21) Anmeldenummer: 14161969.2
(22) Anmeldetag: 27.03.2014
(51) Int. Cl.: H02K 26/00, H02K 11/22, G01M 13/02, H02K 11/24

(54) **Prüfstandsmotor auf der Basis eines Torque-Motors**
Test bench motor based on a torque motor
Moteur de banc d'essai sur la base d'un moteur à couple

(43) Veröffentlichungstag der Anmeldung: 30.09.2015
(73) Patentinhaber: Oehri + Partner AG, 9495 Triesen (LI)
(72) Erfinder: Oehri, Othmar, 9495 Triesen (LI)
(74) Vertreter: Bogensberger, Burkhard

(56) Entgegenhaltungen:
- GB-A- 1 259 776
- JP-A- S6 066 659
- US-A- 3 586 938
- US-A1- 2013 257 230
- US-A1- 2013 257 327

## Beschreibung

### TECHNISCHES GEBIET

Die vorliegende Erfindung liegt im Bereich Elektrotechnik, Maschinenbau und Mechanik bezieht sich auf Elektromotoren, insbesondere Elektromotoren für Prüfstände mechanischer Bauteile.

### STAND DER TECHNIK

Maschinen, welche mechanisch stark beanspruchte Komponenten enthalten, müssen vor ihrer Übergabe an den Handel ausgiebig auf Funktionsfähigkeit, mechanische Belastbarkeit und Langlebigkeit dieser Komponenten getestet werden. Solche Komponenten können Kugellager, Stossdämpfer, mechanische Federn, drehende Wellen, Zahnräder, Lenksäulen, Gelenkverbindungen, und zahlreiche andere Maschinen-, Fahrzeug-, Schiffs- oder Flugzeugteile sein. Um solche Komponenten zuverlässig, sicher, schnell, möglichst einfach und mit geringem Konstruktionsaufwand entsprechend den vorgeschriebenen Prüfnormen zu prüfen, wurde der vorliegende Torque-Motor entwickelt.

Der klassische Aufbau eines Prüfstandes für mechanische Bauteile erfolgt durch Zusammensetzen einzelner Standardkomponenten, wobei die Konstruktion des Aufbaus auf das zu prüfende Produkt (Prüfling) ausgelegt wird. Der Antrieb und die zur Belastungsmessung erforderlichen Sensoren sind üblicherweise als Standardkomponenten erhältlich und werden im Regelfall den Aufgaben der Prüfung entsprechend vom zuständigen Prüfstands-Konstrukteur ausgewählt. Als Antriebe werden Gleichstrom(DC)- oder Wechselstrom(AC)-Motoren verwendet, je nachdem, wie hoch die zur Prüfung erforderlichen Drehmomente, die Dynamik und die Geschwindigkeit sein müssen. Das an den Prüfling angelegte Drehmoment wird - je nach Auslegung des Antriebs, der Genauigkeit der Messung und der Konstruktion des Prüfstandes - mit einem Drehmoment-Messflansch oder einer Torsionswelle erfasst. Die absolute Position und/oder die relative Position des Prüflings werden mit einem oder mehreren Drehgebern erfasst. D.h. es braucht mehrere Komponenten, die gut aufeinander abgestimmt sein müssen, um die komplexe Aufgabe eines drehenden Testlaufs normgerecht zu erfüllen.

Die Prüfaufgaben in der Industrie werden immer aufwändiger und komplexer und die Hersteller von mechanisch stark beanspruchten Komponenten stehen in einem starken Wettbewerb zueinander und sind daher gezwungen, Materialkosten möglichst tief zu halten. Ferner nimmt auch die Bedeutung der Produktehaftung der Hersteller zu und somit auch deren Verpflichtung, belegen zu können, dass sie gewissenhaft entwickelt und auch umfänglich getestet haben. Diese Situation führt dazu, dass wesentlich häufiger und umfassender getestet werden muss als noch vor 10 oder 20 Jahren. Bedingt durch die kürzer gewordenen Entwicklungszyklen muss auch immer schneller getestet werden. Dies ist jedoch mit herkömmlichen Methoden des Aufbaus eines Prüfstandes durch Zusammensetzen von Standardkomponenten nur bedingt möglich und zwingt die Hersteller von Prüfständen immer wieder zu Kompromissen bezüglich Prüfzeit, Genauigkeit, Reproduzierbarkeit und Kosten für die Prüfstände.

Bei bestehenden Prüfständen wurden als wesentlichste Schwachpunkte der Antriebsmotor und die Sensorik erkannt. So ist beispielsweise die Einrichtung zur Messung von Drehmoment und Winkelposition meist extern am Motor angebracht. Extern angebrachte Sensoren sind aber anfällig für Störungen oder gar Ausfälle, sind aufwändig in der Montage und verteuern die Prüfstandskonstruktion daher in einem erheblichen Ausmass. Darüber hinaus sind Prüfstandsmotoren häufig nicht explizit für den Einsatz in Prüfständen ausgelegt, weshalb ihre Lager frühzeitig verschleissen und beispielsweise halbjährlich oder noch öfter ausgetauscht werden müssen. Ausserdem werden meist speziell gewickelte AC-Motoren mit Standard-Frequenzumrichtern eingesetzt. Die Frequenzumrichter erfüllen mittlerweile zwar alle Voraussetzungen für den Einsatz im Mess- und Prüffeld, aber die Motoren sind ein Kompromiss.

US 2013/0257230 A1 offenbart einen elektrischen Antriebsmotor für einen Industrieroboter, ausgestattet mit im Motor angeordneten Sensoren zur Messung sowohl eines genauen Drehmoments als auch eines genauen Rotationswinkels an der Output-Seite. Die Drehmomentsensoren umfassen Dehnungsmessstreifen.

US 2013/0257327 A1 berichtet von einem mobilen Antriebsmotor, beispielsweise zum Antreiben eines Rollstuhls, der über einen innenliegenden Drehmomentsensor verfügt, welcher mit einem Stromaufnahme-Steuermodul zusammenarbeitet, welches den in Abhängigkeit des gemessenen Drehmoments erforderlichen Stromfluss regelt.

JP 60066659 A beschreibt einen Torque-Antriebsmotor, welcher zur Messung des Drehmoments einen berührungslos arbeitenden Photodetektor einsetzt.

GB 1259776 bezieht sich auf einen elektrischen Anlasser für einen Verbrennungsmotor, welcher für das Starten des Verbrennungsmotors ausreichend Drehmoment zur Verfügung stellen muss.

US 3,586,938 bezieht sich auf einen Servomotor, der aus zwei kooperierenden Synchronmotoren besteht, die einander über Drehwinkelmessungen beeinflussen.

### KURZE BESCHREIBUNG DER ERFINDUNG

Die vorliegende Erfindung, wie sie in den unabhängigen Ansprüchen dargestellt ist, eliminiert die Schwachpunkte bekannter Prüfstände und stellt insbesondere eine Antriebseinheit zur Verfügung, welche für den Einsatz in Prüfständen prädestiniert, einfach in der Montage, problemlos und sicher in der Bedienung und langlebig im Einsatz ist, sowie darüber hinaus noch Energie einspart.

Der erfindungsgemässe Torque-Motor ist eine integrierte Lösung von Antrieb und Sensorik, um all die Schwierigkeiten und Probleme, die eine Lösung mit dem Zusammensetzen von Standardkomponenten mit sich bringt, zu eliminieren. Durch eine solche Lösung, die gezielt auf den Einsatz zum Prüfen und Messen entwickelt wurde, lassen sich folgende wesentlichen Vorteile erzielen:
- Messen und Prüfen auf demselben Prüfstand. Es entfällt das zumeist notwendige Umspannen auf einen anderen Prüfstand, was in der Regel ziemlich aufwändig und zeitintensiv ist;
- erhebliche Reduktion der Anzahl an Komponenten für die Messung und Prüfung durch die Integration aller erforderlichen Sensoren in den Motor;
- durch die hohe Dynamik sinkt die Prüfdauer bei gleicher Prüfzyklenanzahl;
- der Motor ist eine einfache und kleine Einheit und gewährt dadurch viel konstruktive Freiheit bei der Auslegung der Prüfstände;
- durch das geringere Gewicht des neuen Motors ergibt sich auch eine Ersparnis bei dessen Aufhängung;
- Serviceintervalle werden etwa fünf- bis zehnmal länger im Vergleich zu herkömmlichen Prüfstandsantrieben, wodurch sich entsprechend geringere Unterhaltskosten ergeben;
- lediglich kurze Unterbrüche bei eventuell auftretenden Fehlern, weil einfach die gesamte Motoreinheit ersetzt wird. Es ist keine Neueinstellung der Sensoren notwendig;
- falsche Resultate bei Prüfungen und Messungen werden wesentlich reduziert oder gar vollständig eliminiert, weil die Abstimmung der Sensoren zum Motor, z.B. Eichung, Vorspannung, etc, nicht mehr vorgenommen werden muss;
- geringerer Installationsaufwand durch einfache Montage;
- Energieersparnis dank effizienter Motorbauweise.

Die Erfindung bezieht sich weiters auf die Verwendung des Prüfstandsmotors zur Funktions- und/oder Belastbarkeitsprüfung drehender mechanischer Bauteile wie z.B. Lenkwellen.

### KURZE BESCHREIBUNG DER ABBLDUNGEN

- Abb.1: zeigt einen Querschnitt durch einen erfindungsgemässen Prüfstandsmotor auf der Basis eines Torquemotors;
- Abb.2: zeigt ein Frontelement des Torquemotors aus Fig. 1;
- Fig.3: zeigt eine schematische Ansicht der Anordnung der Momente-Sensorik im Torquemotor;
- Fig.4: zeigt eine schematische Ansicht der Anordnung der Winkel-Sensorik im Torquemotor;
- Fig.5: zeigt eine schematische Ansicht der Anordnung der vorderen und hinteren Schrägkugellager; vorderes Lager als Festlager, hinteres Lager als vorgespanntes Loslager ausgeführt.

### DETAILLIERTE BESCHREIBUNG DER ERFINDUNG

Der erfindungsgemässe Prüfstandsmotor besteht aus einem Torquemotor 1 mit integrierter Sensorik. Das heisst, im Motorinneren ist eine unabhängige Drehmomentmessung integriert und eine genaue Winkelmessung. Somit kann diese Antriebseinheit das genaue Drehmoment messen ohne auf eine Berechnung über den Motorstrom zurückgreifen zu müssen. Es ist eine vom Antriebsstrang elektrisch unabhängige Messung. Zugleich kann die Antriebseinheit auch den absoluten Winkel messen und somit jede Winkelposition erfassen. Das Ganze ist in eine sehr kompakte Form eingepasst und gibt somit dem Konstrukteur eines Prüfstandes viele Freiheiten und macht den ganzen Prüfstandsaufbau wesentlich einfacher und damit auch kostengünstiger.

Die Ausführungen sind skalierbar, d.h. von 130 Nm bis 690 Nm Nennmoment mit denselben Frontabmessungen. Andere Grössen können nach demselben Konstruktionsprinzip realisiert werden, z.B. von 60 Nm bis 130 Nm in einer kleineren Bauform und ab 700 Nm bis 1250 Nm in einer grösseren Bauform.

Aktorik: In einer beispielhaften Ausführungsform umfasst der erfindungsgemässe Torquemotor 1 einen Aktor in Form eines Direktantriebes 6 (Synchronmaschine), der bei einem relativ grossen Durchmesser von 310 mm eine relativ geringe Breite von 110 mm aufweist, wobei der Stator 5 einen Durchmesser von 290 mm bei einer Breite von 80 mm und der innen laufende Rotor 6 einen Durchmesser von 220 mm bei einer Breite von 31 mm aufweist. Mit diesen Abmessungen im Verhältnis von ca. 3:1 (Motordurchmesser zu Motorbreite) ergibt sich ein kompakter, bedienungsfreundlicher und dennoch drehmomentstarker Motor. Alternative Ausführungsformen können ein Verhältnis im Bereich von 2:1 bis 5:1 (Motordurchmesser zu Motorbreite) aufweisen. Ebenso können auch die Abmessungen des Stators und des Rotors für bestimmte Einsatzzwecke anders dimensioniert sein, z.B. kann das Verhältnis von Durchmesser zu Breite beim Stator im Bereich von ca. 2.5:1 bis 5:1 und beim Rotor im Bereich von ca. 5:1 bis 10:1 gewählt werden.

Als Direktantrieb kann z.B. derjenige von Etel (Typ: TMB0291-030 3TDS) eingesetzt werden, der den Rahmen für die Gesamtkonstruktion des Motors bildet. Die Form des Gehäuses mit Frontplatte 2, hinterer Halteplatte 3 und dazwischen liegendem Gehäusemantel 4 wird durch den Stator 5 definiert, die Momentesensorik 9,10,18 hingegen durch den innenlaufenden Rotor 6.

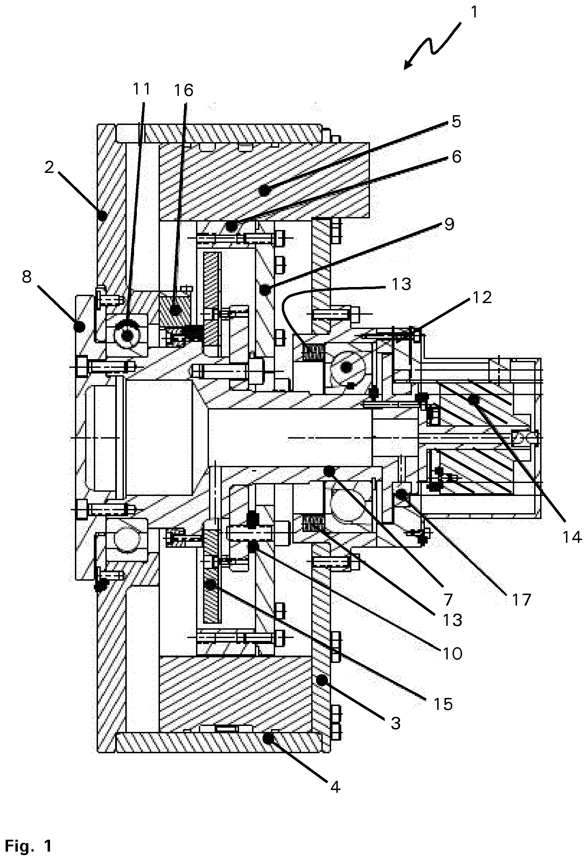

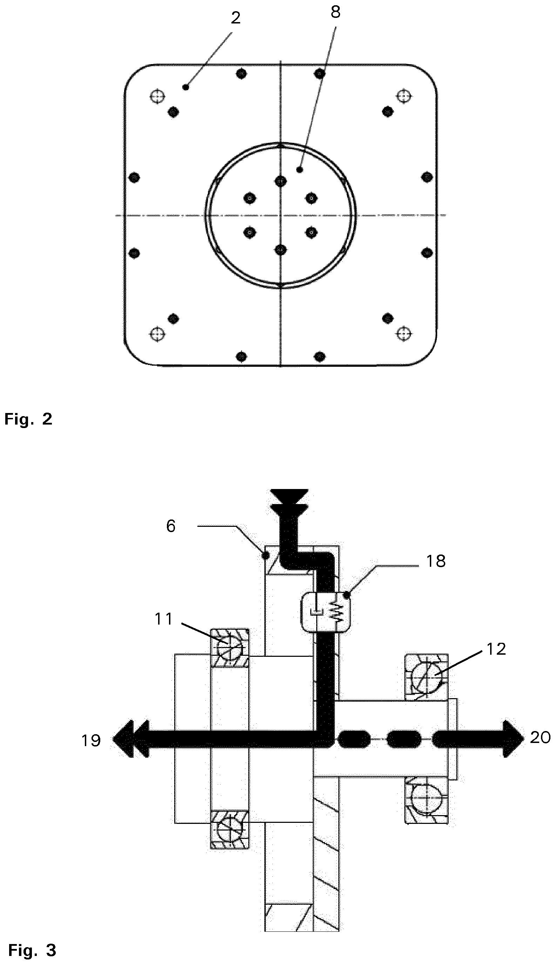

Drehmoment-Sensorik: An Sensorik sind zum einen die Drehmomentmesseinrichtung sowie die Winkelmessung vorhanden. Zur Messung des Drehmoments werden typischerweise DMS-Sensoren (Dehnungsmessstreifen) 9 und Piezosensoren 10 verwendet, welche sich im Momentefluss 19 (siehe Abb.1 und Abb.3) zwischen Direktantrieb 6 und Prüflingsadapter 8 befinden und dadurch vor Einflüssen von aussen, wie z.B. Schlägen, weitestgehend geschützt sind. Dabei sind die DMS-Sensoren 9 für die Erfassung länger anhaltender Drehmomente von Vorteil, während die Piezosensoren 10 vor allem kürzere Drehmomentimpulse verlässlich anzeigen. Die DMS- und Piezosensoren sind seriell geschaltet und befinden sich zwischen Rotor 6 und Welle 7 (Abb.1). Die Anordnung der Sensoren im Momentefluss 19 vor dem Lager bedingt zwar einen kleinen systematischen Fehler, dem steht aber der grosse Vorteil gegenüber, dass die Sensorik vor allfälligen Beschädigungen durch Schläge auf den Adapter geschützt ist.

Die zur Sensorik gehörende Elektronik zur Datenverarbeitung ist beispielsweise mittels eines Sensorprints15 direkt am Sensor angebaut, was zur Folge hat, dass die Elektronik mitdrehend ist. Die Datenübertragung kann bei der gewählten Variante einer optischen Schnittstelle durch das Zentrum des Motors erfolgen, für welchen Zweck die Hauptwelle 7 bevorzugt als Hohlwelle ausgeführt ist.

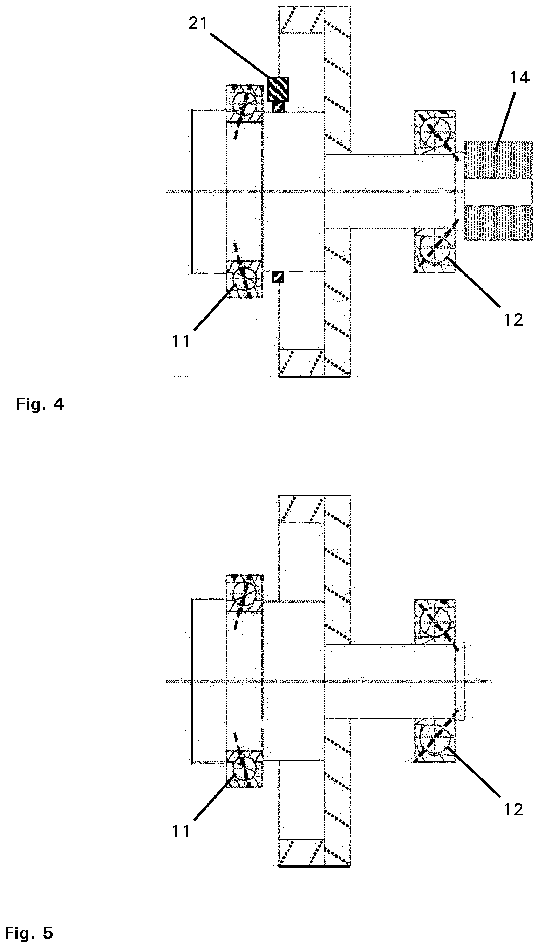

Winkelmess-Sensorik (Abb.4): Die Winkelmessung muss einerseits hochpräzise sein, wenn sich der Motor in der Betriebsart "Messen" befindet und andererseits muss für die Steuerung die absolute Position des Rotors bzw. des Prüflings bekannt sein. Für die hochpräzise Winkelmessung kann ein Winkelmessgerät 16 verwendet werden, welches im Wesentlichen einen Inkrementalgeber 21 umfasst, der aus einem Geber-Ring, beispielsweise einem Signum RMSE-Ring, sowie einem Abtastkopf, z.B. einem Signum ReadHead, besteht und sich dadurch relativ gut im Aufbau des Motors unterbringen lässt, und zwar möglichst nahe am Adapter 8 für den zu testenden Prüfling. Ein geeigneter Inkrementalgeber 21 wäre beispielsweise der Signum Lesekopf und Geberring von Renishaw. An den Drehgeber 14, typischerweise ein Singleturn oder Multiturn Absolutwertgeber, werden keine speziellen Anforderungen gestellt, ausser dass der Messdatenfluss 20 durch das Zentrum des Motors hindurch nach aussen geführt werden muss. Als Absolutwertegeber kann daher ein Hohlwellen-Sensor verwendet werden, der am vorderen, dem Prüfling zugewandten Ende der Antriebswelle angebaut ist.

Lagerung: Bei einem Prüfstand, z.B. einem Lenkwellenprüfstand, sind meist drei Betriebszustände mit unterschiedlichen Anforderungen an die Lagerung vorgesehen.
- Messen: Um exakte Messewerte zu garantieren, ist ein hohe Güte der Lager erforderlich.
- Oszillieren: Für Verschleisstests wird dem Prüfling, z.B. einer Lenkwelle, ein oszillierendes Moment bei einer Frequenz von bis zu 10Hz aufgebracht. Aufgrund der Steifigkeit des Prüflings, z.B. der Lenkwelle, resultiert eine Amplitude des Winkels von beispielsweise 5 Grad. Die Lagerbelastung besteht in dieser Betriebsart fast nur aus dem Eigengewicht.
- Bewegungssimulation, z.B. Lenksimulation: die Bewegungssimulation erfolgt mit Geschwindigkeiten von z.B. maximal 300 1/min sowie radialen Kräften im Bereich von 1 kN und axialen Kräften im Bereich von etwa 0.5 kN.

Um die hohe Güte bei Messungen zu garantieren, wird als vorderes Lager 11 (siehe Abb. 1 und Abb. 5) typischerweise ein Spindellager eingesetzt. Das Spindellager, auch Schrägkugellager bezeichnet, kann neben den radialen Kräften auch axiale Kräfte in einer Richtung aufnehmen. In der erfindungsgemässen Konstruktion des Motors ist dieses Lager 11 bevorzugt das Festlager der Welle.

In der Betriebsart "Oszillieren" treten ausser dem Eigengewicht kaum weitere Belastungen auf. Allerdings kann die kurzhubige rotative Bewegung, welche kleiner als die Wälzkörperteilung ist, anstelle eines Abrollens der Wälzkörper zu einem Gleiten derselben führen. Um dies zu verhindern ist es empfehlenswert oder sogar notwendig, die Lager mit Federn 13, beispielsweise Druckfedern, in axialer Richtung vorzuspannen. Die Vorspannung wird auf das hintere Lager 12 aufgebracht, welches ebenfalls ein Schrägkugellager ist und zum vorderen Lager die Gegenführung übernimmt.

Die grössten Belastungen treten bei der Simulation der vorgesehenen Bewegungen des Prüflings, beispielsweise der Lenkbewegung einer Lenkwelle, auf. Eine Simulation mit SimMechanics von zwei erfindungsgemässen Motoren, von welchen einer um 90 Grad abgewinkelt ist, zeigt radiale Lagerbelastungen im Bereich von 1 kN. In der Simulation gibt der eine Motor die Position vor, der andere bremst mit einem Moment von 100 Nm. Die Simulation ergibt nur Richtwerte, da die geometrischen Maße des Prüflings, z.B. der Lenkwelle, nur anhand von Bildern geschätzt werden und das hintere Lager 12 als reines Loslager, d.h. ohne Vorspannung, modelliert ist. Somit ist die negative axiale Kraft des vorderen Lagers 11 nicht ganz korrekt. Für die Praxis empfiehlt es sich aber, das hintere Schrägkugellager mit einer Federvorspannung von 800 Nm auszustatten und geeignetes Lagerfett einzusetzen, das auch bei oszillierenden Bewegungen Schutz gegen Verschleiss bietet.

Mit den Online-Tools Medais und Bearnix von INA/FAG konnte eine Lebensdauer für die unterschiedlichen Betriebsarten berechnet werden. Es ergab sich in allen Fällen eine nominelle Lebensdauer von mehr als 1 Million Stunden für den erfindungsgemässen Motor. Die nominelle Lebensdauer wird von 90% der Lager erreicht oder überschritten, bevor erste Anzeichen von Werkstoffermüdung auftreten.

Um Erkenntnisse über die Robustheit der Lager des erfindungsgemässen Motors zu erlangen, wurde ein Dauertest durchgeführt. Zu diesem Zweck wurde der Motor zur Aufbringung des oszillierenden Moments über eine Lenkwelle eingespannt. Durch das Spiel in der Lenkwelle und deren Elastizität führt der erfindungsgemässe Motor bei Aufbringung eines Moments eine entsprechende Bewegung aus.

Für die Aufbringung der Last wurde dem Motor während 10 Minuten ein sinusförmiges Sollmoment mit einer Amplitude von 10Nm sowie einer Frequenz von 5Hz vorgegeben. Die Amplitude von 10Nm entspricht bei der verwendeten Gelenkwelle ungefähr einer Winkelamplitude von 0.011 rad (0.63 Grad) des verwendeten Rotors. Anschliessend erfolgte die Messung des Moments bei einer Belastung von 5, 10, 15 und 20 Nm mit der erfindungsgemäss im Motor platzierten Sensorik. Ebenfalls alle 10 Minuten wurde die Temperatur des Torquemotor-Stators mit den eingebauten Sensoren gemessen. Etwa alle 24 Stunden wurde die Gelenkwelle demontiert und die Gleichstromverstärkung des Motors bei unterschiedlichen Sollmomenten gemessen.

Resultate: Der Motor war während des Dauerversuchs ca. 200 Stunden oder 3.6x10⁶ Oszillationen in Betrieb. Es war keine merkbare Verschlechterung der Gleichstromverstärkung von Moment zu Winkelgeschwindigkeit feststellbar. Sichtbare Veränderungen besonders zum Zeitpunkt t = 100h dürften daher rühren, dass die Messung der Gleichstromverstärkung bei unterschiedlichen Temperaturen ausgeführt wurde.

Die Temperaturmessung im Stator zeigte maximale Temperaturen von ungefähr 28 C. Die beobachteten Temperaturschwankungen stammen zum einen von den Messunterbrüchen bei der Demontage der Gelenkwelle für die Gleichstrommessung und zum anderen von den Schwankungen der Umgebungstemperatur.

An den Lagern waren nach dem 200h Dauertest noch keinerlei Verschleisserscheinungen feststellbar.

Nachfolgend werden einige technische Daten des Antriebs einer erfindungsgemässen Ausführungsform des neuen Torquemotors angegeben. In Klammern aufgeführte Daten sind errechnete Werte, die sich bei einer weiteren Optimierung des Systems realistischerweise ergeben könnten:

### a) Antrieb, Motor / Umrichter und Steuerung

Betriebsspannung: 3*400V / 50 Hz
Anschlussleistung: 10 kW
Drehzahlbereich bei Nennmoment: (0) bis 400 1/min
Drehzahlbereich bei reduziertem Nennmoment: 400 bis 1600 1/min
Dauermoment wassergekühlt: 100 Nm
Dauermoment luftgekühlt: 60 Nm
Spitzenmoment: 130 Nm (250 Nm)
Positioniergenauigkeit: 0.1 Grad (0.001 Grad)
minimale Geschwindigkeit im regulären Betrieb: 0.4 Grad/s (0.01 Grad/s)
Drehrichtungswrechselrate (Schwingrate +/- 20°): 20 Hz (25 Hz)

Die Drehzahlabweichung im Langsamlauf sowie die erreichbare Positioniergenauigkeit hängen sehr stark von der verwendeten Regelung ab. Die Grenzen werden durch das verwendete Messsystem bestimmt.

### b) Technische Daten Mess-Systeme Rotor

Drehmomentmessung DMS +/- 500 Nm: 0 bis 30 Hz
Drehmomentmessung Piezosensoren +/- 500 Nm: 3 bis 400 Hz (2000 Hz)

Die Drehmomentmessung basiert auf DMS für statische Kräfte und Piezosensoren für dynamische Kräfte. Beide Werte werden bei der Aufbereitung zu einem Gesamtmesssignal zusammengeführt.
Drehmoment Gesamt +/- 500 Nm: 0 bis 400 Hz (2000 Hz)
Genauigkeit der Momentmessung: 1% FSO (0.1% FSO). "FSO" = Free Space Optical Communication = optischer Richtfunk (d.h. die Daten werden optisch von den drehenden Teilen nach aussen übertragen).
Optional: Querkräfte gemessen über Dehnungsmessstreifen (DMS) auf der Motorachse bis +/- 1 kN, fg ca. 200 Hz. (fg = Grenzfrequenz)

Diese Messung ist zur Erkennung von Achsfehlstellungen eines Prüflings sehr gut geeignet.
Temperatur Rotorelektronik: -20 bis + 100 °C

Die Messsignale werden von der Elektronik im Rotor vorverarbeitet und digital, optisch zum Stator und der Steuerung übertragen.
Baudrate: 250 kBaud (1 MBaud)
Datenbreite: 16 Bit (24 Bit)
Schnittstelle: RS485 (EtherCat)

### c) Technische Daten Mess-Systeme Stator

Relativwrinkelmessung Auflösung: 0.001 Grad (0.0001 Grad)
Absolutwrinkelmessung Auflösung: 0.043 Grad (0.01 Grad)

Die Absolutwinkelmessung wird zur Kommutierung des Motors benötigt. Die Signale werden digital direkt der Steuerung und dem Umrichter übergeben. Optional: Mit zusätzlichen HALL-Sensoren kann die magnetische Position des Rotors direkt gemessen werden. Dadurch ist eine Verbesserung der Regeleigenschaften der Motorsteuerung möglich.

**BEZUGSZEICHENLISTE**

| | |
|---|---|
| 1 | Prüfstandsmotor |
| 2 | Frontplatte |
| 3 | Halteplatte hinten |
| 4 | Gehäusemantel |
| 5 | Stator |
| 6 | Rotor, Direktantrieb |
| 7 | Welle |
| 8 | Adapterflansch vorn |
| 9 | DMS-Sensor zur Drehmomentmessung |
| 10 | Piezosensor zur Winkelmessung |
| 11 | Festlager vorn |
| 12 | vorgespanntes Loslager hinten |
| 13 | Druckfeder zum axialen Vorspannen des hinteren Lagers |
| 14 | Drehgeber (Absolutwertegeber) |
| 15 | Sensorprint mit Aufbauten |
| 16 | Sensor zur Drehwinkelerfassung, Winkelmessgerät |
| 17 | Spulen zur Energieübertragung |
| 18 | Momentsensoren |
| 19 | Momentefluss |
| 20 | Messdatenfluss |
| 21 | Inkrementalgeber mit Lesekopf |

## Patentansprüche

1. Prüfstandsmotor in Form eines Torquemotors (1) umfassend einen Stator (5), einen Rotor (6), eine Antriebswelle (7), zugehörige Lager (11,12), einen mit der Antriebswelle verbundenen Adapterflansch (8) zur Aufnahme eines Prüfgegenstandes, Sensoren (9,10) zur Messung von Drehmomenten und Sensoren (16) zur Messung von Drehwinkeln, wobei die Sensoren (9,10,16) im Inneren des Motors (1) angeordnet sind, **dadurch gekennzeichnet, dass** die Sensoren zur Drehmomentmessung sowohl Dehnungsmessstreifen als auch Piezosensoren umfassen, welche zwischen Rotor (6) und Antriebswelle (7) angeordnet und seriell geschaltet sind.

2. Prüfstandsmotor nachAnspruch 1, **dadurch gekennzeichnet, dass** die Sensoren (16) zur Winkelmessung in unmittelbarer Nähe zum Adapterflansch (8) positioniert sind.

3. Prüfstandsmotor nachAnspruch 1 oder 2, **dadurch gekennzeichnet, dass** die Sensoren mit Mitteln (15) zur elektronischen Datenverarbeitung von erfassten Messdaten verbunden sind, wobei diese Mittel gegebenenfalls direkt an den Sensoren befestigt sind und gemeinsam mit diesen mitdrehen.

4. Prüfstandsmotor nach einem der Ansprüche 1 bis 3, **dadurch gekennzeichnet, dass** die Antriebswelle (7) eine Hohlwelle ist und durch diese Hohlwelle Messdatenleitungen von den Sensoren und/oder der Sensor-Elektronik nach aussen verlaufen.

5. Prüfstandsmotor nach Anspruch 4, **dadurch gekennzeichnet, dass** er über eine optische Schnittstelle verfügt und die Übertragung der Messdaten über die Hohlwelle im Zentrum des Motors erfolgt.

6. Prüfstandsmotor nach einem der Ansprüche 1 bis 5, **dadurch gekennzeichnet, dass** die Antriebswelle (7) in einem vorderen Bereich nahe dem Adapterflansch (8) durch ein vorderes Lager (11) und im Bereich ihres rückwärtigen Endes durch ein hinteres Lager (12) gelagert wird, wobei das vordere und hintere Lager als Schrägkugellager ausgeführt sind.

7. Prüfstandsmotor nach Anspruch 6, **dadurch gekennzeichnet, dass** das hintere Lager (12) mittels Federn (13) in axialer Richtung vorgespannt ist.

8. Prüfstandsmotor nach einem der Ansprüche 1 bis 7, **dadurch gekennzeichnet, dass** er ein Verhältnis von Motordurchmesser zu Motorbreite in einem Bereich von 2:1 bis 5:1 aufweist.

9. Verwendung des Prüfstandsmotors nach einem der Ansprüche 1 bis 8 zur Funktions- und/oder Belastbarkeitsprüfung drehender mechanischer Bauteile.

10. Verwendung nach Anspruch 9 zum Messen und Prüfen auf ein und demselben Prüfstand.

## Claims

1. A test bench motor in the form of a torque motor (1), comprising a stator (5), a rotor (6), a drive shaft (7), related bearings (11, 12), an adapter flange (8) connected with the drive shaft for accommodation of a test object, sensors (9, 10) for measuring torques, and sensors (16) for measuring angles of rotation, wherein the sensors (9, 10, 16) are disposed in the interior of the motor (1), **characterized in that** the sensors for torque measurement comprise not only strain gauges but also piezo sensors, which are disposed between rotor (6) and drive shaft (7) and switched in series.

2. The test bench motor according to claim 1, **characterized in that** the sensors (16) for measuring angle are positioned in the immediate vicinity of the adapter flange (8).

3. The test bench motor according to claim 1 or 2, **characterized in that** the sensors are connected with means (15) for electronic data processing of recorded measurement data, wherein these means are directly attached to the sensors, as applicable, and rotate along with them.

4. The test bench motor according to one of claims 1 to 3, **characterized in that** the drive shaft (7) is a hollow shaft and that measurement data lines run from the sensors and/or the sensor electronics to the outside through this hollow shaft.

5. The test bench motor according to claim 4, **characterized in that** it has an optical interface and that transfer of the measurement data takes place by way of the hollow shaft in the center of the motor.

6. The test bench motor according to one of claims 1 to 5, **characterized in that** the drive shaft (7) is mounted in a front region, close to the adapter flange (8), by means of a front bearing (11), and mounted by a back bearing (12) in the region of its back end, wherein the front bearing and back bearing are configured as angular ball bearings.

7. The test bench motor according to claim 6, **characterized in that** the back bearing (12) is biased in the axial direction by means of springs (13).

8. The test bench motor according to one of claims 1 to 7, **characterized in that** it has a ratio of motor diameter to motor width in a range from 2:1 to 5:1.

9. Use of the test bench motor according to one of claims 1 to 8 for testing rotating mechanical components with regard to function and/or strength.

10. Use according to claim 9 for measuring and testing on one and the same test bench.

## Revendications

1. Moteur de banc de test se présentant sous la forme d'un moteur couple (1), comprenant un stator (5), un rotor (6), un arbre d'entraînement (7), des paliers associés (11,12), une bride d'adaptation (8) reliée à l'arbre d'entraînement et destiné à recevoir un objet de test, des capteurs (9, 10) destinés à mesurer des couples et des capteurs (16) destinés à mesurer des angles de rotation, lesdits détecteurs (9, 10, 16) étant disposés à l'intérieur du moteur (1), **caractérisé en ce que**, pour mesurer des couple, les capteurs comportent des jauges de contraintes et des capteurs piézo-électriques qui sont disposés et connectés en série entre le rotor (6) et l'arbre d'entraînement (7).

2. Moteur de banc de test selon la revendication 1, **caractérisé en ce que**, pour effectuer des mesures angulaires, les capteurs (16) sont positionnés à proximité immédiate de la bride d'adaptation (8).

3. Moteur de banc de test selon la revendication 1 ou 2, **caractérisé en ce que** les capteurs sont reliés à des moyens (15) de traitement électronique de données de mesure détectées, ces moyens étant éventuellement fixés directement aux capteurs et tournant conjointement avec eux.

4. Moteur de banc de test selon l'une des revendications 1 à 3, **caractérisé en ce que** l'arbre d'entraînement (7) est un arbre creux et des lignes de données de mesure s'étendent à travers d'arbre creux depuis des capteurs et/ou l'électronique des capteurs vers l'extérieur.

5. Moteur de banc de test selon la revendication 4, **caractérisé en ce qu'**il comporte une interface optique et la transmission des données de mesure se fait au centre du moteur par l'intermédiaire de l'arbre creux.

6. Moteur de banc de test selon l'une des revendications 1 à 5, **caractérisé en ce que** l'arbre d'entraînement (7) est monté dans une zone avant à proximité de la bride d'adaptation (8) par le biais d'un palier avant (11) et dans la zone de son extrémité arrière par le biais d'un palier arrière (12), les paliers avant et arrière étant réalisés sous la forme de roulements à billes à contact oblique.

7. Moteur de banc de test selon la revendication 6, **caractérisé en ce que** le palier arrière (12) est précontraint dans la direction axiale par des ressorts (13).

8. Moteur de banc de test selon l'une des revendications 1 à 7, **caractérisé en ce qu'**il présente un rapport diamètre du moteur sur largeur de moteur dans une gamme de 2:1 à 5:1.

9. Utilisation du moteur de banc de test selon l'une des revendications 1 à 8 pour tester le fonctionnement et/ou la résilience de composants mécaniques en rotation.

10. Utilisation selon la revendication 9 pour effectuer des mesures et des tests sur le même banc de test.
